# EUROPEAN PATENT SPECIFICATION

(11) **EP 3 897 123 B1**
(45) Date of publication and mention of the grant of the patent: **13.11.2024**
(21) Application number: 19813460.3
(22) Date of filing: 28.11.2019
(51) Int. Cl.: A01M 7/00

(54) **AGRICULTURAL SPRAYER WITH WARM WATER RINSE SYSTEM**
LANDWIRTSCHAFTLICHER SPRÜHER MIT WARMWASSERSPÜLSYSTEM
PULVÉRISATEUR AGRICOLE AVEC SYSTÈME DE RINÇAGE À EAU CHAUDE

(30) Priority: 19.12.2018 GB 201820704
(43) Date of publication of application: 27.10.2021
(73) Proprietor: AGCO International GmbH, 8212 Neuhausen am Rheinfall (CH)
(72) Inventor: SCHELL, Daan, 5864BE Meerlo (NL)
(74) Representative: AGCO Intellectual Property Department
(86) International application number: PCT/EP2019/082874
(87) International publication number: WO 2020/126386

(56) References cited:
- DE-U1- 8 711 752
- US-A1- 2012 266 981
- US-A1- 2013 140 374

## Description

### BACKGROUND OF THE INVENTION

### Field of the Invention

The present invention relates to an agricultural sprayer and a method of operating such a sprayer.

### Description of Related Art

Agricultural sprayers are used in the application of various materials to field crops. Such systems apply various chemicals in the form of a spray for the purposes of crop protection, e.g. through the use of appropriate pesticides or herbicides, or for the purposes of limiting or promoting plant growth, e.g. through use of liquid growth regulators and fertiliser respectively. Agricultural sprayers may be provided as self-propelled sprayers, or as systems to be mounted to an agricultural tractor, e.g. as a towed or hitch-mounted implement.

Agricultural crop sprayers typically comprise a product tank for holding a solution of plant protection product, and a product dispensing system for applying the solution to the field or crop. The product dispensing system is commonly provided by a series of nozzles spaced along a boom which itself extends transversely with respect to a forward direction of travel. A plumbing network is provided to fluidly connect the product tank with the nozzles and typically comprises hoses and controllable valves to direct the fluid as required.

One of the primary concerns in the use of potentially harmful chemicals such as pesticides or fertilisers is that proper cleaning and maintenance of sprayers is necessary to avoid injury to non-target crop species, e.g. through the incorrect application of residual chemicals from a preceding sprayer operation. Accordingly, sprayer operators must pay close attention to proper cleaning procedures, to prevent contamination or injury to crops or to the environment in general.

It is known to provide sprayers with an on-board rinse tank which is separate to the product tank and is connected to the plumbing network. During a rinse process, which may be concurrent with a spraying operation, clean water is conveyed from the rinse tank through the plumbing network to the nozzles and/or the product tank. The dilute 'rinsings' are then dispensed onto the crop, onto a piece of land or into a biobed for example.

Such cleaning procedures often require the rinsing of the product tank and plumbing with a large volume of rinse water to ensure safe concentration levels. However, such excessive use of water can be relatively wasteful, as well as resulting in increased cost levels for sprayer operators. In addition, sprayers can often be required to return to a centralised depot for a cleaning operation, if the relatively large volumes of rinse water or cleaning solutions are too bulky to transport with the sprayer itself. Such a crop sprayer is disclosed in US 2012/266981 A1.

### BRIEF SUMMARY OF THE INVENTION

In accordance with a first aspect of the invention there is provided an agricultural crop sprayer comprising a product tank for holding a solution of plant protection product, a product dispense system, a rinse tank for holding a rinse fluid, and a plumbing network which fluidly connects the product tank, the product dispense system and the rinse tank, wherein the sprayer further comprises a heat source configured to heat the rinse fluid.

In accordance with a second aspect of the invention there is provided a method of operating an agricultural crop sprayer, the crop sprayer comprising a product tank for holding a solution of plant protection product, a product dispense system, and a rinse tank for holding a rinse fluid, the method comprising the steps of:
- heating the rinse fluid above ambient temperature; and then,
- conveying the heated rinse fluid from the rinse tank to at least one of the product tank and the product dispense system.

By utilising rinse water or fluid that is heated above an ambient temperature the sprayer is more effectively rinsed. Warm or hot water has an increased kinetic activity and a higher saturation point compared to cooler ambient water. As such heated water is more effective at removing chemical residues, especially sticky or powdery residues that are difficult to shift with cold water. Advantageously, the invention delivers more effective removal of chemical residues and offers the potential to reduce the volume of water required to deliver sufficient cleaning.

In a preferred embodiment a prime mover provides the heat source. The prime mover may be an internal combustion engine or an electric motor by way of example. It will be recognised that sprayers typically include an engine whether that be an engine of a self-propelled sprayer or an engine of a tractor towing a trailed sprayer. The prime mover may serve to deliver a driving torque to ground engaging wheels for propulsion of the sprayer.

Prime movers typically expel significant quantities of waste energy in the form of heat. Advantageously, this waste heat can be exploited to heat the rinse fluid. A heat exchange system may be configured to transfer waste heat from the prime mover to the rinse fluid wherein a first heat exchanger is arranged to extract waste heat from the prime mover.

Waste heat from the prime mover can be transferred to the rinse fluid using one of several different arrangements. In one embodiment of this aspect, the heat exchange system involves a closed fluid circuit which includes the heat exchanger associated with the prime mover and a second heat exchanger located inside the rinse tank. In this arrangement a closed cooling circuit of the prime mover is extended so as to transfer the waste heat to the rinse fluid indirectly. The second heat exchanger may, for example, comprise a coil immersed in the rinse fluid inside the rinse tank.

In another embodiment, waste heat is transferred directly from the prime mover to the rinse fluid. In this embodiment the heat exchange system comprises a fluid circuit which includes the first heat exchanger being fluidly connected to the rinse tank wherein the rinse fluid serves as a heat exchange medium which is passed through, or proximate to, the prime mover.

The heat exchange system may further comprise a thermostat to regulate the temperature of the rinse fluid.

In yet another embodiment a hydraulic system provides the heat source. The hydraulic system may include a hydraulic pump and one or more hydraulic consumers for powering various systems on the sprayer. In one example, a trailed sprayer comprises a hydraulic pump that is driven mechanically from a power takeoff shaft of a tractor attached to the sprayer. Waste heat generated by the hydraulic system may be collected and transferred to the rinse fluid by a heat exchange system which may include a closed fluid circuit.

In the case of scavenged waste heat serving as the heat source, whether that be from a prime mover or from a hydraulic system, a further advantage is a reduced dedicated cooling requirement and thus a cooling system of a reduced size. In other words, the extraction of the waste heat itself serves to cool the prime mover or hydraulic system.

In yet another embodiment a dedicated heat source is provided. For example the heat source may be a liquid fuel burner or an electrically-powered immersion heater.

In another preferred embodiment a further rinse tank is provided and serves as a cold rinse tank for holding rinse fluid at a cooler ambient temperature. In this arrangement there is provided a heated rinse tank and an ambient or cold rinse tank. It is recognised that heated rinsings may have a detrimental effect if applied to a crop. By providing a second rinse tank for cooler water, a sequenced rinsing process may be employed wherein a heated rinse step is followed by a cold rinse step. The rinsings may be combined before being dispensed.

A sprayer having both hot and cold rinse tanks offers several advantages. Firstly, the heated rinsings may be cooled before being dispensed to crops as explained above. Secondly, a smaller volume of heated rinse fluid may be required thus potentially allowing for the rinse fluid to be heated to higher temperatures with the same energy input.

### BRIEF DESCRIPTION OF THE DRAWINGS

Further advantages of the invention will be apparent from reading the following description of specific embodiments of the invention with reference to the appended drawings in which:
Figure. 1 is an illustration of an agricultural crop sprayer according to an aspect of the invention;
Figure 2 is a schematic drawing of a sprayer system according to a first embodiment of the invention, for use with the sprayer of Figure 1;
Figure 3 is a schematic drawing of a sprayer system according to a second embodiment of the invention, for use with the sprayer of Figure 1;
Figure 4 is a schematic drawing of a sprayer system according to a third embodiment of the invention, for use with the sprayer of Figure 1;
Figure 5 is a schematic drawing of a sprayer system according to a fourth embodiment of the invention, for use with the sprayer of Figure 1; and,
Figure 6 is a process diagram for an operating method of the sprayer system of Figure 5.

### DETAILED DESCRIPTION OF THE INVENTION

The following detailed description illustrates the invention by way of example and not by way of limitation. This description will clearly enable one skilled in the art to make and use the invention, and describes several embodiments, adaptations, variations, alternatives and uses of the invention, including what we presently believe is the best mode of carrying out the invention. Additionally, it is to be understood that the invention is not limited in its application to the details of construction and the arrangements of components set forth in the following description or illustrated in the drawings. The invention is capable of other embodiments and of being practiced or being carried out in various ways.

Use of directional terms such as "front", "rear", "longitudinal" and "transverse" in the following description of specific embodiments is made in relation to the normal forward direction of travel of an agricultural crop sprayer having a longitudinal axis parallel to the direction of travel.

Various embodiments are illustrated and described. Like components that are common to multiple embodiments will share the same reference numerals for ease of understanding.

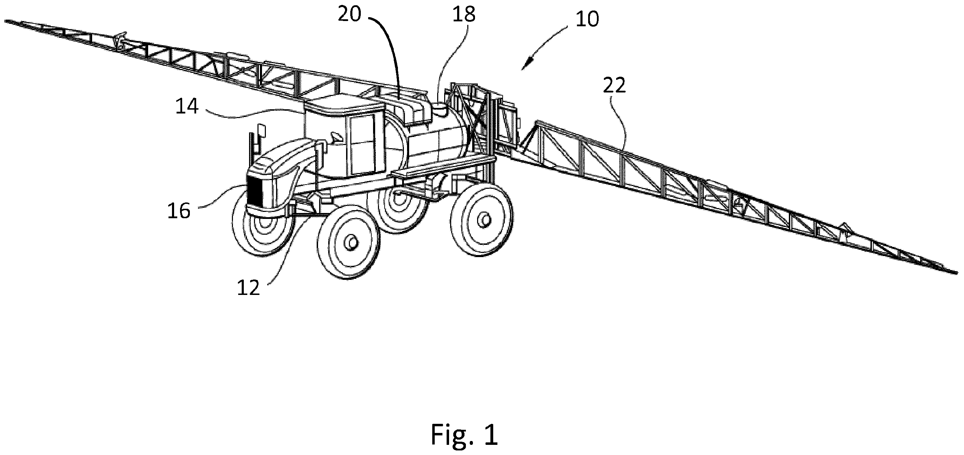

Figure 1 shows an agricultural crop sprayer 10 used to apply crop protection products to agricultural crops in a field. Agricultural crop sprayer 10 comprises a chassis 12 and a cab 14 mounted on the chassis 12. Cab 14 may house an operator and a number of controls for the sprayer 10. An internal combustion engine 16 may be mounted on a forward portion of chassis 12 in front of cab 14 or may be mounted on a rearward portion of the chassis 12 behind the cab 14. The engine 16 may comprise, for example, a diesel engine or a gasoline powered internal combustion engine. The engine 16 provides torque to propel the agricultural sprayer 10 and also to provide energy used to power the on-board spray systems which will be described below.

Although a self-propelled crop sprayer is shown and described hereinafter, it should be understood that the embodied invention is applicable to other agricultural sprayers including pull-type or towed sprayers and mounted sprayers, e.g. mounted on a 3-point linkage of an agricultural tractor.

The sprayer 10 further comprises a product tank 18 used to store a liquid solution of plant protection product to be sprayed on the field. The solution can include chemicals or plant protection products (PPPs), such as but not limited to, herbicides, fungicides, insecticides, plant growth regulators, and/or fertilizers. Product tank 18 is mounted on chassis 12, either in front of or behind cab 14. The crop sprayer 10 can include more than product tank 18 to store different chemicals to be sprayed on the field. The stored chemicals may be dispersed by the sprayer 10 one at a time or different chemicals may be mixed and dispersed together in a variety of mixtures.

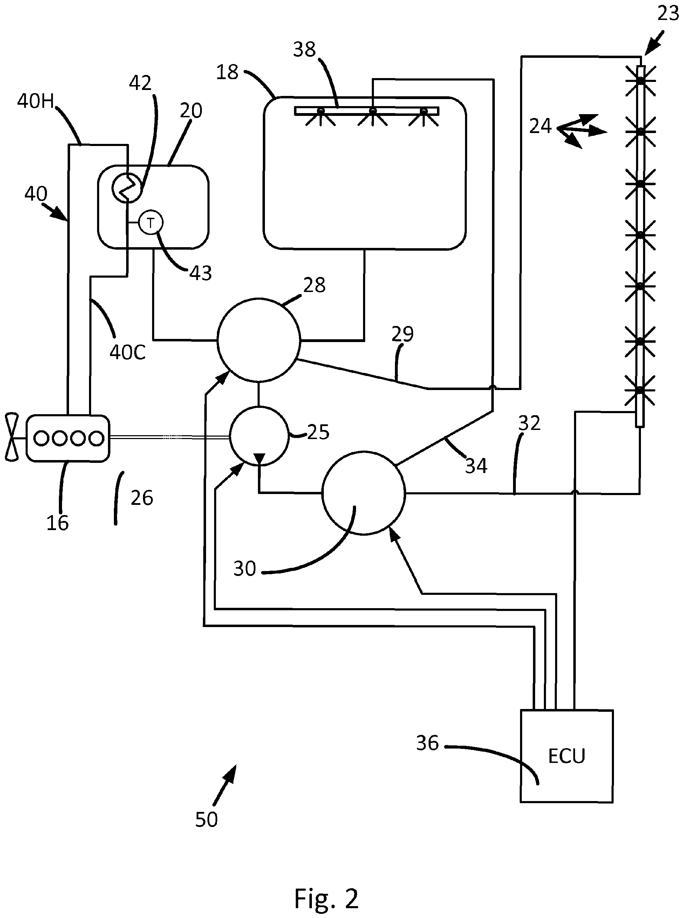

A sprayer system according to one aspect of the invention is illustrated in a schematic outline in Fig. 2 at 50. The sprayer system 50 is suitable for implementation on sprayer 10. System 50 further comprises a rinse tank 20 for holding a rinse fluid which can be used to rinse the product tank 18 and associated plumbing after or during a spraying operation.

At least one boom 22 on the sprayer 10 is used to distribute the fluid from the product tank 18 over a wide swath as the sprayer 10 is driven through the field. The boom 22 is mounted to the rear of the chassis 12 and extends transversely away the chassis 12. The boom is provided as part of a product dispense system 23, which further comprises an array of spray nozzles 24 arranged along the length of the boom 22.

A plumbing network is provided which fluidly connects the product tank 18, the product dispense system 23 and the rinse tank 20. The plumbing network will be understood to comprise any suitable valves, tubing or piping arranged for fluid communication of these components.

In more detail, the plumbing network comprises suction portion connected to a suction side of fluid pump 25 and a pressurised portion connected to a pressure side of pump 25. Pump 25 is driven in this embodiment by a drive connection 26 which derives torque from engine 16.

The suction portion of the plumbing network includes an input valve or manifold 28 which selectively connects a respective outlet of the product tank 18 and the rinse tank 20 to a suction side of the pump 25. A boom recirculation line 29 is also connected to the input manifold 28. The pressurised portion of the plumbing network comprises a distribution valve 30 which selectively directs pressurised fluid from the pressure side of pump 25 to one of a boom supply line 32 and a tank rinse line 34. The manifolds 28,30 can comprise any suitable configuration of valve elements, e.g. a single multiport valve element, or an array of individual elements.

The sprayer 10 further comprises an electronic control unit (ECU) 36, which is configured to control the operation of the various components of the system, e.g. the distribution valve 30, the input valve 28, the pump 25, the nozzles 24 and the boom arm 22 position. The ECU 36 can operate in response to commands issued by an operator in the sprayer cab 14, or based on pre-programmed operating routines, which may be triggered by operator action.

During a spraying mode of operation the pump 25 draws PPP solution from product tank 18 via input manifold 28 and delivers the solution at pressure to the product dispense system 23 via distribution valve 30 and boom supply line 32. The pressurised solution is dispensed to the field by nozzles 24.

Optionally, when the rate of application is low, the PPP solution may be recirculated via boom recirculation line 29.

During a rinse mode of operation the pump 25 draws rinse fluid from rinse tank 20 via input manifold 28 and delivers the rinse fluid at pressure to a set of tank rinse nozzles 38 via tank rinse line 34. The tank rinse nozzles 38 are mounted inside the product tank 18 and are positioned so as to direct a cleaning jet of fluid at the internal surfaces of the product tank 18.

Optionally, the rinse mode of operation may involve the distribution manifold 30 directing some or all of the pressurised rinse fluid through the boom supply line 32 and the boom recirculation line 29 so as to rinse chemical residue therefrom.

In accordance with an aspect of the invention, the rinse fluid is heated by waste heat from the engine 16. A heat exchange system 40 comprises a closed fluid circuit having a heat exchanger 42 immersed in the rinse fluid inside the rinse tank 20. The heat exchanger 42 is fluidly connected in the fluid circuit to a further heat exchanger that is associated or integrated with engine 16. The fluid circuit includes a heated line 40H and a cooled line 40C.

The heat exchange system 40 may operate during a spraying mode of operation so as to scavenge and exploit the waste heat from engine 16 to heat the rinse fluid. By using heated rinse fluid the cleaning effectiveness during the rinse mode is significantly improved.

A thermostat 43 is provided in the heat exchange system so as to regulate the temperature of the rinse fluid. For example, the thermostat 43 may be adapted to regulate the temperature around 60-70°C. Although a connection is not shown, the thermostat 43 may be in communication with the ECU 36, wherein the ECU 36 may be configured to control the temperature of the rinse fluid dependent upon operating conditions or upon operator commands.

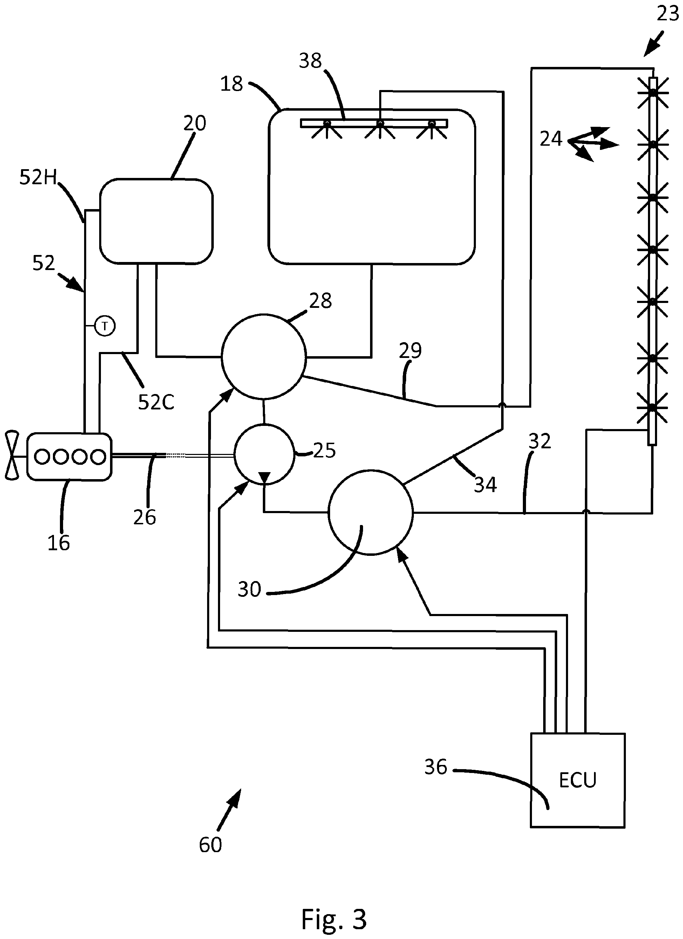

With reference to Figure 3 a second embodiment of a spray system 60 utilises a different heat exchange system to that described above in relation to heating the rinse fluid. In this embodiment waste heat from the engine 16 is recovered and transferred directly to the rinse fluid.

The heat exchange system 52 uses the rinse fluid itself as a heat exchange medium by transporting the rinse fluid from the rinse tank 20 to a heat exchanger associated with engine 16 and returning the heated fluid to the rinse tank 20. The fluid circuit comprises a heated line 52H and a cooled line 52C. The fluid may be circulated by a water pump (not shown) drivingly connected to the engine 16.

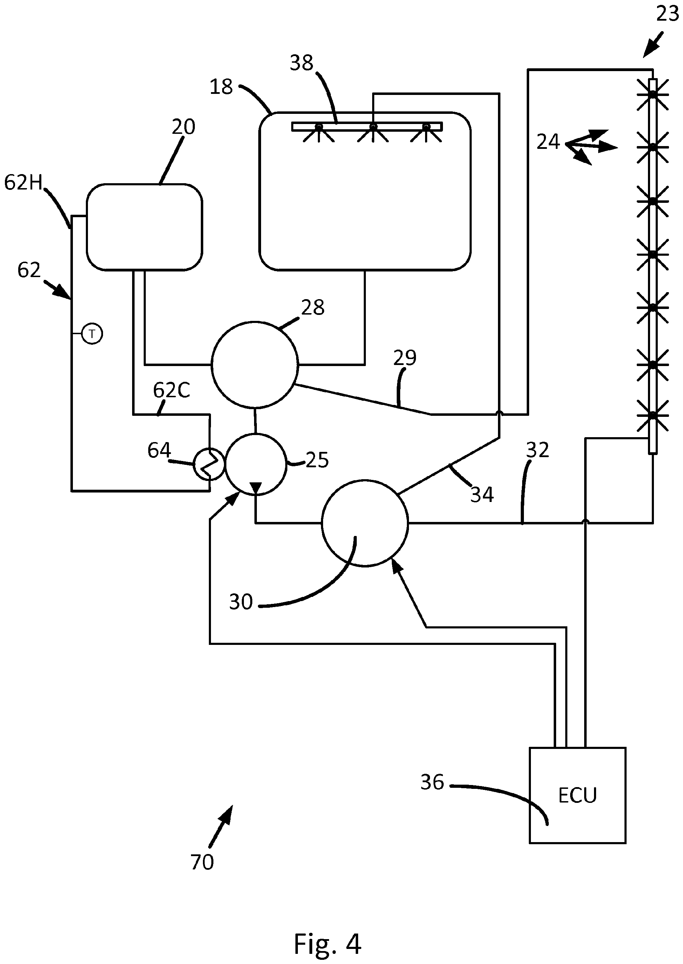

With reference to Figure 4, a third embodiment of a spray system 70 utilises waste heat from parts of an on-board hydraulic system, in this case the pump 25. It should be understood that engine 16 and the input manifold control line has been omitted from Figure 4 only for reasons of clarity. In this embodiment waste heat from the pump 25 is recovered and transferred directly to the rinse fluid.

A heat exchange system 62 comprises a heat exchanger 64 that is mounted proximate to, or integrated with, the pump 25. The heat exchanger 64 is connected in a fluid circuit having a heated line 62H and a cooled line 62C. The cooled line 62C conveys rinse fluid from rinse tank 20 to the heat exchanger 64, whereas the heated line conveys heated rinse fluid from the heat exchanger 64 to the rinse tank 20. A pump (not shown) may be provided in the fluid circuit to force movement of the rinse fluid.

In the embodiment illustrated by Figure 4 the rinse fluid is heated directly by the heat exchange system 62. However, it is envisaged that an independent closed fluid circuit could alternatively be provided together with a heat exchanger in the rinse tank 20 to heat the rinse fluid indirectly.

Although waste heat from the pump 25 of the sprayer system 70 is extracted in this embodiment, it is envisaged that waste heat from other components of a hydraulic system could instead be scavenged whilst remaining in the scope of the invention.

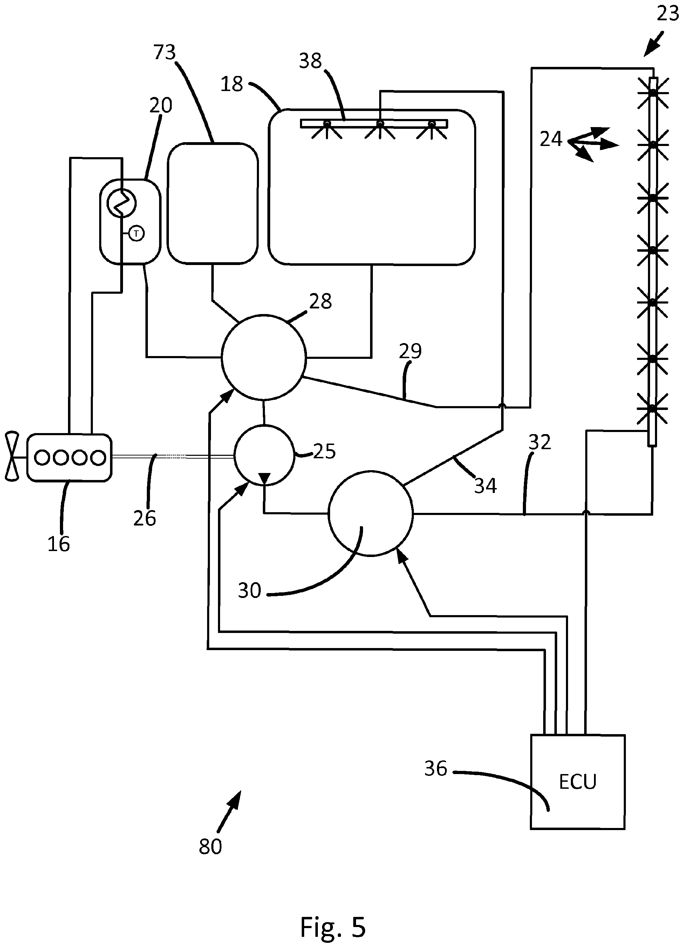

In a fourth embodiment (Figure 5) a spray system 80 comprises a heated rinse tank 20 and a cold rinse tank 73. The rinse fluid in the heated rinse tank 20 is heated using a heat exchange system 40 which is the same as that used by the first embodiment illustrated in Figure 2. However, it should be appreciated that the manner in which the rinse fluid is heated is not critical to this embodiment.

The cold rinse tank 73 serves to hold a volume of rinse fluid at ambient temperature (which is generally cooler than the heated rinse fluid) as is common in known sprayers. The cold water rinse tank 73 has an outlet connected to the input manifold 28 for selective delivery of cold rinse fluid through the pump 25.

It is recognised that, depending on the temperature, heated rinse fluid may cause damage to crops and discharge of the dilute rinsings should be avoided in some situations. The cold rinse fluid from the cold rinse tank 73 can be used in a second stage of rinsing to cool the rinse fluid before being discharged.

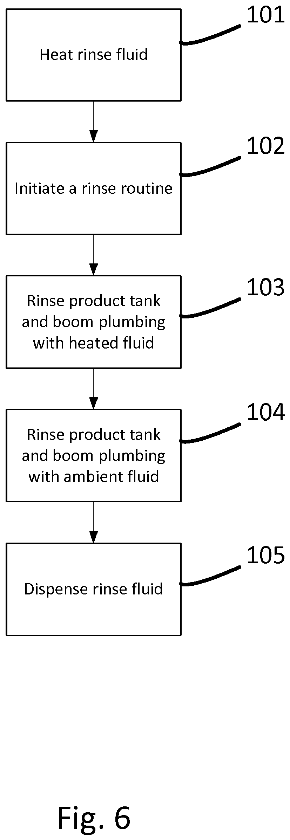

An example method of operation of the spray system 80 of Figure 5 is illustrated in Figure 6. In a first step 101 the rinse fluid in heated rinse tank 20 is heated above ambient temperature by transfer of waste heat from the engine 16 as explained above in relation to Figure 2. For example, the heated rinse fluid may be heated in excess of 40°C.

In a second step 102 a rinse routine is initiated by a user command to the ECU 36. In response the ECU 36 controls input manifold 28 (third step 103) so as to connect the heated rinse tank 20 to the pump 25. Also, the ECI 36 controls distribution manifold 30 so as to connect the pressure side of pump 25 to one or both of the boom supply line 32 and the tank rinse line 34. As part of this rinse process the rinsings may be recirculated via the boom recirculation line 29 and/or the outlet of product tank 18.

In a fourth step 104 the ECU 36 controls input manifold 28 so as to connect the cold rinse tank 73 to the pump 25. In doing so this directs the cold (or ambient) rinse fluid in cold water rinse tank 73 through the plumbing network and to the tank rinse nozzles 38.

In a fifth step 105 the rinsings are dispensed typically via the nozzles 24.

Although the above-described embodiments have involved the scavenging of waste heat from prime movers or hydraulic systems it is envisaged that dedicated heating sources may be provided to heat the rinse fluid in the rinse tank 20. For example, a diesel burner or an electrically-powered immersion heater could be provided in a not illustrated embodiment.

Although the focus of the above-described embodiments has been on a self-propelled crop sprayer, it is envisaged that aspects of the invention can be implemented on trailed sprayers. In one embodiment heat may be scavenged from an engine or exhaust of a tractor to which the sprayer is attached. In another embodiment, heat may be scavenged from a PTO-driven pump mounted to the chassis of a trailed sprayer.

In summary there is provided an agricultural crop sprayer which includes a product tank for holding a solution of plant protection product, a product dispense system and a rinse tank for holding a rinse fluid. A plumbing network fluidly connects the product tank, the product dispense system and the rinse tank. A heat source is provided to heat the rinse fluid. The heat source may be a prime mover or a hydraulic pump wherein waste heat is scavenged therefrom.

It should be emphasized that the above-described embodiments of the present disclosure are merely possible examples of implementations, merely set forth for a clear understanding of the principles of the disclosure.

## Claims

1. An agricultural crop sprayer (10) comprising a product tank (18) for holding a solution of plant protection product, a product dispense system (23), a rinse tank (20) for holding a rinse fluid, and a plumbing network which fluidly connects the product tank (18), the product dispense system (23) and the rinse tank (20), **characterised in that** the sprayer further comprises a heat source (16; 25) configured to heat the rinse fluid.

2. A crop sprayer (10) according to Claim 1, further comprising a prime mover (16) which provides the heat source, and a heat exchange system (40; 52) configured to transfer waste heat from the prime mover to the rinse fluid and including a first heat exchanger arranged to extract waste heat from the prime mover.

3. A crop sprayer (10) according to Claim 2, wherein the heat exchange system (40) further comprises a closed fluid circuit which includes the first heat exchanger and a second heat exchanger (42) located inside the rinse tank (20).

4. A crop sprayer (10) according to Claim 2, wherein the heat exchange system (52) further comprises a fluid circuit (52H, 52C) which includes the first heat exchanger being fluidly connected to the rinse tank (20) wherein the rinse fluid serves as a heat exchange medium.

5. A crop sprayer (10) according to any one of Claims 2 to 4, wherein the heat exchange system (40; 52) further comprises a thermostat (43) to regulate the temperature of the rinse fluid.

6. A crop sprayer (10) according to any one of Claims 2 to 5, wherein the heat exchange system (40; 52) further comprises a flow control valve in communication with an electronic controller (36), wherein the flow control valve is controlled so as to regulate a temperature of the rinse fluid.

7. A crop sprayer (10) according to any one of Claims 2 to 6, wherein the prime mover (16) is an internal combustion engine.

8. A crop sprayer (10) according to any preceding claim, further comprising a hydraulic system (25) which provides the heat source, and a heat exchange system (62) configured to transfer waste heat from the hydraulic system to the rinse fluid.

9. A crop sprayer (10) according to Claim 8, wherein the hydraulic system comprises a hydraulic pump (25) to generate a source of pressurised hydraulic source, wherein the hydraulic pump provides the heat source.

10. A crop sprayer (10) according to any preceding claim, further comprising a cold rinse tank (73) connected to the plumbing network.

11. A crop sprayer (10) according to Claim 10, further comprising a controller (36) for controlling the plumbing network, wherein the controller is configured to selectively activate a rinse process in which the rinse tank (20) is put into fluid communication with one of the product tank (18) and the product dispense system (23) before the cold rinse tank (73) is put into fluid communication with said one of the product tank (18) and the product dispense system (23).

12. A crop sprayer (10) according to Claim 1, wherein the heat source comprises a liquid fuel burner.

13. A crop sprayer (10) according to Claim 1, wherein the heat source comprises an electrically-powered immersion heater.

14. A method of operating an agricultural crop sprayer (10), the crop sprayer comprising a product tank (18) for holding a solution of plant protection product, a product dispense system (23), and a rinse tank (20) for holding a rinse fluid, **characterised in that** the method comprises the steps of:
- heating the rinse fluid above ambient temperature; and then,
- conveying the heated rinse fluid from the rinse tank to at least one of the product tank and the product dispense system.

15. A method of operating a crop sprayer (10) according to Claim 14, wherein the crop sprayer (10) further comprises a cold rinse tank (73), and wherein the method further comprises, after said conveying of the heated rinse fluid, conveying fluid at ambient temperature from the cold rinse tank to said at least one of the product tank and the product dispense system.

## Patentansprüche

1. Landwirtschaftlicher Erntegutsprüher (10) mit einem Produkttank (18) zum Vorhalten einer Lösung eines Pflanzenschutzprodukts, einem Produktabgabesystem (23), einem Spültank (20) zum Vorhalten eines Spülfluids und einem Rohrleitungsnetzwerk, welches den Produkttank (18), das Produktabgabesystem (23) und den Spültank (20) fluidisch verbindet,
**dadurch gekennzeichnet, dass** der Sprüher weiterhin eine Wärmequelle (16; 25) aufweist, die ausgebildet ist, um das Spülfluid zu wärmen.

2. Erntegutsprüher (10) nach Anspruch 1, **weiterhin** mit einer Antriebsmaschine (16), welche die Wärmequelle bereitstellt, und einem Wärmetauschersystem (40; 52), das ausgebildet ist, um Abwärme von der Antriebsmaschine auf das Spülfluid zu übertragen, und das einen ersten Wärmetauscher beinhaltet, der eingerichtet ist, um Abwärme von der Antriebsmaschine abzuziehen.

3. Erntegutsprüher (10) nach Anspruch 2, **wobei** das Wärmetauschersystem (40) weiterhin einen geschlossenen Fluidkreislauf aufweist, welcher den ersten Wärmetauscher und einen zweiten Wärmetauscher (42) umfasst, der innerhalb des Spültanks (20) angeordnet ist.

4. Erntegutsprüher (10) nach Anspruch 2, **wobei** das Wärmetauschersystem (52) weiterhin einen Fluidkreislauf (52H, 52C) aufweist, welcher den ersten Wärmetauscher beinhaltet, der fluidisch mit dem Spültank (20) verbunden ist, wobei das Spülfluid als Wärmetauschermedium dient.

5. Erntegutsprüher (10) nach einem der Ansprüche 2 bis 4, **wobei** das Wärmetauschersystem (40; 52) weiterhin einen Thermostat (43) aufweist, um die Temperatur des Spülfluids zu regeln.

6. Erntegutsprüher (10) nach einem der Ansprüche 2 bis 5, **wobei** das Wärmetauschersystem (40; 52) weiterhin ein Durchflussregelventil aufweist, das in Verbindung mit einem elektronischen Regler (36) steht, wobei das Durchflussregelventil gesteuert wird, um eine Temperatur des Spülfluids zu regeln.

7. Erntegutsprüher (10) nach einem der Ansprüche 2 bis 6, **wobei** die Antriebsmaschine (16) ein Verbrennungsmotor ist.

8. Erntegutsprüher (10) nach einem der vorhergehenden Ansprüche, **weiterhin** mit einem Hydrauliksystem (25), welches die Wärmequelle bereitstellt, und einem Wärmetauschersystem (62), das ausgebildet ist, um Abwärme von dem Hydrauliksystem auf das Spülfluid zu übertragen.

9. Erntegutsprüher (10) nach Anspruch 8, **wobei** das Hydrauliksystem eine Hydraulikpumpe (25) aufweist, um eine Quelle von unter Druck stehendem Hydraulikmedium zu generieren, wobei die Hydraulikpumpe die Wärmequelle bereitstellt.

10. Erntegutsprüher (10) nach einem der vorhergehenden Ansprüche, **weiterhin** mit einem Kaltspültank (73), der mit dem Rohrleitungsnetzwerk verbunden ist.

11. Erntegutsprüher (10) nach Anspruch 10, **weiterhin** mit einer Steuerung (36) zum Steuern des Rohrleitungsnetzwerks, wobei die Steuerung ausgebildet ist, um wahlweise einen Spülprozess zu aktivieren, in welchem der Spültank (20) in Fluidverbindung mit dem Produkttank (18) oder dem Produktabgabesystem (23) gesetzt wird, bevor der Kaltspültank (73) in Fluidverbindung mit dem Produkttank (18) oder dem Produktabgabesystem (23) gesetzt wird.

12. Erntegutsprüher (10) nach Anspruch 1, **wobei** die Wärmequelle einen Flüssigbrennstoffbrenner aufweist.

13. Erntegutsprüher (10) nach Anspruch 1, **wobei** die Wärmequelle einen elektrisch betriebenen Tauchsieder aufweist.

14. Verfahren zum Betreiben eines landwirtschaftlichen Erntegutsprühers (10), wobei der Erntegutsprüher einen Produkttank (18) zum Vorhalten einer Lösung eines Pflanzenschutzprodukts, ein Produktabgabesystem (23) und einen Spültank (20) zum Vorhalten eines Spülfluids aufweist,
**dadurch gekennzeichnet, dass** das Verfahren die Schritte aufweist:
- Erwärmen des Spülfluids über eine Umgebungstemperatur; und dann,
- Weiterleiten des erwärmten Spülfluids von dem Spültank zu dem Produkttank und/oder dem Produktabgabesystem.

15. Verfahren zum Betreiben eines Erntegutsprühers (10) nach Anspruch 14, wobei der Erntegutsprüher (10) weiterhin einen Kaltspültank (73) aufweist, und wobei das Verfahren, nach dem Weiterleiten des erwärmten Spülfluids, weiterhin ein Weiterleiten von Fluid bei Umgebungstemperatur von dem Kaltspültank zu dem Produkttank und/oder dem Produktabgabesystem aufweist.

## Revendications

1. Pulvérisateur de culture agricole (10) comprenant un réservoir de produit (18) destiné à contenir une solution de produit phytosanitaire, un dispositif de distribution de produit (23), un réservoir de rinçage (20) destiné à contenir un fluide de rinçage et un réseau de tuyauterie qui raccorde de manière fluidique le réservoir de produit (18), le dispositif de distribution de produit (23) et le réservoir de rinçage (20),
**caractérisé en ce que** le pulvérisateur comprend, en outre, une source de chaleur (16 ; 25) configurée de manière à réchauffer le fluide de rinçage.

2. Pulvérisateur de culture (10) selon la revendication 1, comprenant, en outre, un moteur principal (16) qui fournit la source de chaleur et un dispositif d'échange thermique (40 ; 52) configuré de manière à transférer la chaleur perdue par le moteur principal au fluide de rinçage et comportant un premier échangeur thermique agencé de manière à extraire de la chaleur perdue par le moteur principal.

3. Pulvérisateur de culture (10) selon la revendication 2, dans lequel le dispositif d'échange thermique (40) comprend, en outre, un circuit fluide fermé qui comporte le premier échangeur thermique et un second échangeur thermique (42) situé à l'intérieur du réservoir de rinçage (20).

4. Pulvérisateur de culture (10) selon la revendication 2, dans lequel le dispositif d'échange thermique (52) comprend, en outre, un circuit de fluide (52H, 52C) qui comporte le premier échangeur thermique qui est raccordé de manière fluidique au réservoir de rinçage (20), dans lequel le fluide de rinçage sert de fluide d'échange thermique.

5. Pulvérisateur de culture (10) selon l'une quelconque des revendications 2 à 4, dans lequel le dispositif d'échange thermique (40 ; 52) comprend, en outre, un thermostat (43) afin de réguler la température du fluide de rinçage.

6. Pulvérisateur de culture (10) selon l'une quelconque des revendications 2 à 5, dans lequel le dispositif d'échange thermique (40 ; 52) comprend, en outre, une vanne de commande de débit en communication avec une unité de commande électronique (36), dans lequel la vanne de commande de débit est commandée afin de réguler une température du fluide de rinçage.

7. Pulvérisateur de culture (10) selon l'une quelconque des revendications 2 à 6, dans lequel le moteur principal (16) est un moteur à combustion interne.

8. Pulvérisateur de culture (10) selon l'une quelconque des revendications précédentes, comprenant, en outre, un dispositif hydraulique (25) qui fournit la source de chaleur et un dispositif d'échange thermique (62) configuré de manière à transférer la chaleur perdue par le dispositif hydraulique au fluide de rinçage.

9. Pulvérisateur de culture (10) selon la revendication 8, dans lequel le circuit hydraulique comprend une pompe hydraulique (25) afin de former une source de fluide hydraulique sous pression, dans lequel la pompe hydraulique fournit la source de chaleur.

10. Pulvérisateur de culture (10) selon l'une quelconque des revendications précédentes, comprenant, en outre, un réservoir de rinçage à froid (73) raccordé au réseau de tuyauterie.

11. Pulvérisateur de culture (10) selon la revendication 10, comprenant, en outre, une unité de commande (36) destinée à commander le réseau de tuyauterie, dans lequel l'unité de commande est configurée de manière à activer sélectivement une opération de rinçage dans laquelle le réservoir de rinçage (20) est mis en communication fluidique avec l'un du réservoir de produit (18) et du dispositif de distribution de produit (23) avant que le réservoir de rinçage à froid (73) soit mis en communication fluidique avec ledit un parmi le réservoir de produit (18) et le dispositif de distribution de produit (23).

12. Pulvérisateur de culture (10) selon la revendication 1, dans lequel la source de chaleur comprend un brûleur à combustible liquide.

13. Pulvérisateur de culture (10) selon la revendication 1, dans lequel la source de chaleur comprend un réchauffeur électrique immergé.

14. Procédé de commande d'un pulvérisateur agricole de culture (10), le pulvérisateur de culture comprenant un réservoir de produit (18) destiné à contenir une solution de produit phytosanitaire, un dispositif de distribution de produit (23) et un réservoir de rinçage (20) destiné à contenir un fluide de rinçage, **caractérisé en ce que** le procédé comprend les étapes de :
chauffage du fluide de rinçage au-dessus de la température ambiante ; et, ensuite,
transfert du fluide de rinçage chauffé à partir du réservoir de rinçage vers au moins l'un du réservoir de produit et du dispositif de distribution de produit.

15. Procédé de commande d'un pulvérisateur de culture (10) selon la revendication 14, dans lequel le pulvérisateur de culture (10) comprend, en outre, un réservoir de rinçage à froid (73) et dans lequel le procédé comprend, en outre, après ledit transfert du fluide de rinçage chauffé, le transfert du fluide à température ambiante à partir du réservoir de rinçage à froid vers ledit au moins un parmi le réservoir de produit et le dispositif de distribution de produit.
